# EUROPEAN PATENT APPLICATION

(11) **EP 0 718 958 A2**
(43) Date of publication of application: **26.06.1996**
(21) Application number: 95309231.9
(22) Date of filing: 19.12.1995
(51) Int. Cl.: H02K 7/102

(54) **Braking arrangement for a motor**

(30) Priority: 22.12.1994 GB 9425950
(71) Applicant: ELECTROLUX OUTDOOR PRODUCTS LIMITED, Newton Aycliffe, Co Durham DL5 6UP (GB)
(72) Inventor: Bowden, Michael, Newton Aycliffe, Co. Durham DL5 4XS (GB)
(74) Representative: Arthur, Bryan Edward

(57) **Abstract**

A fan wheel (18) mounted on the drive shaft (2) of an electric or other motor is automatically braked by a wrap spring (17) when the motor is switched off or the load is removed. The motor casing has limited freedom to rotate about the motor axis and is rotationally biased in the direction of rotation of the shaft (2) by a tension spring (23) which tends to wrap the wrap spring 17 around the fan wheel (17). When the motor starts, the reaction to the motor torque twists the motor casing by a few degrees in the opposite direction, wrapping the wrap spring (17) to a position (17) allowing free rotation. Dangerous freewheeling is thereby prevented.

## Description

The present invention relates to a braking arrangement for a motor such as an electric motor for example, and to a motor drive arrangement (e.g. powered by an electric motor) utilising such a braking arrangement.

The invention provides a braking arrangement for a motor, said braking arrangement comprising a fixed frame, a movable frame carried on the fixed frame and adapted to carry the frame of the motor, and the movable frame being mounted for limited rotation about the motor biasing means coupled between the movable frame and the fixed frame and tending to twist the movable frame relative to the fixed frame about said axis, and motor braking means coupled to the movable frame and biased to the braked condition, the motor braking means being movable to an unbraked condition in response to said movable frame twisting in response to a motor torque about said axis against the action of the said biasing means and the motor braking means being movable to a braked condition on cessation of said motor torque.

In use, when the motor is started the reaction to the motor torque causes a small angular movement of the moving frame in the opposite direction to the direction of rotation of the output shaft of the motor. This angular movement or twist can be used to release the brake on the motor by means of a mechanical linkage for example. Alternatively this angular movement can be sensed by a sensor and used to generate a control signal which activates an electrically operated brake, for example.

In principle, the braking arrangement can be arranged to brake the motor when the motor torque ceases when the motor is turned off, for example, or when the motor torque ceases or falls below a threshold value when the load is removed, for example. This provides an important safety advantage, since it prevents the motor from freewheeling. This is particularly important in the case of electrically operated cutting equipment, such as electric mowers and hedgetrimmers for example.

Preferably the motor braking means is biased to the braked condition by spring means and is coupled to the movable frame by a mechanical linkage which is arranged to move the motor braking means to the unbraked condition against the action of said spring means. Preferably the mechanical linkage comprises a camming arrangement.

Preferred embodiments of the invention are described below by way of example only with reference to Figures 1 to 5 of the accompanying drawings wherein:
Figure 1 is a side elevation, partly in section, showing a braking arrangement in accordance with the invention;
Figure 2 is a plan view of the arrangement of Figure 1, with base plate B removed;
Figure 3 is a side elevation, partly in section, of a further embodiment of the invention, and
Figure 4 is a plan view taken on IV-IV of Figure 3.

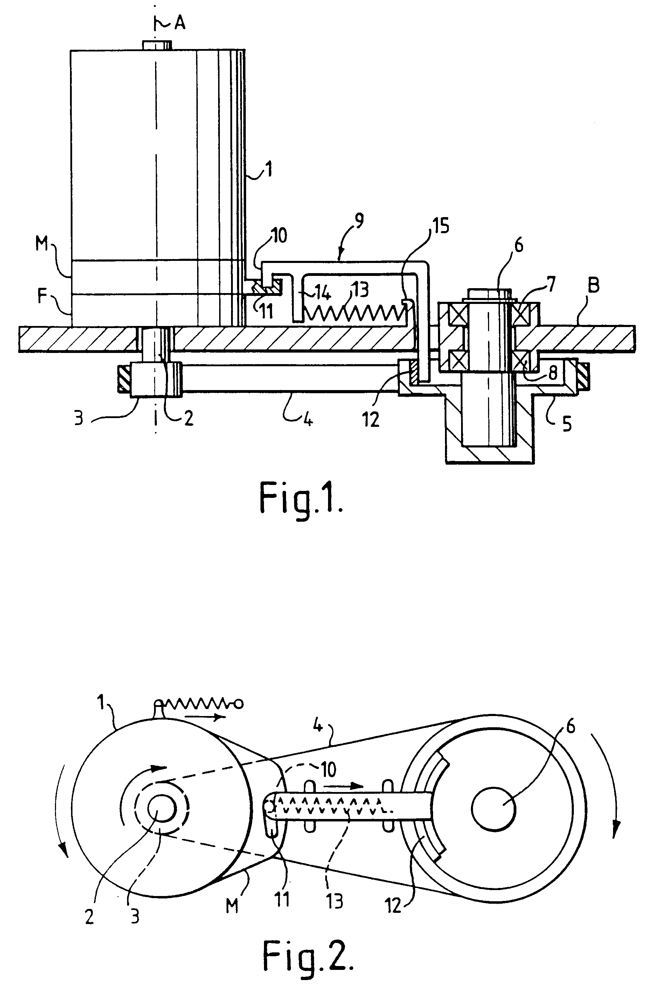

Referring to Figures 1 and 2, the fixed frame F is mounted on a base plate B and carries a movable frame M which is mounted (by means not shown) for limited rotational movement (e.g. 10° to 60°, or greater) about motor axis A. The frame of a motor 1 is fixedly attached to movable frame M, and as shown in Figure 2 the resulting assembly is rotationally biased in the clockwise direction by a tension spring coupled between base plate B and a peripheral lug 31 on frame M. This is the direction of rotation of motor shaft 2.

Movable frame M carries a horizontal extension in which an inclined slot 11 is formed. A brake comprising a sliding member 9 is coupled to frame M by a camming arrangement constituted by a pin 10 inserted in slot 11. Sliding member 9 slides horizontally from left to right as shown in Figure 1, on bearings (not shown). Compression spring 13 is coupled between an extension 14 from sliding member 9 and a extension 15 from base plate B, biasing the sliding member towards the left in Figures 1 and 2 so that a brake pad 12 is normally urged against the inner periphery of an output pulley 5. Brake pad 12 is carried on a leg of member 9 which extends downwardly through an aperture in base plate B.
Pulley 5 is mounted on a shaft 6 which is supported from base plate B on bearings 7 and 8 and is driven by a belt 4 which is driven by a drive pulley 3 mounted on motor output shaft 2.

In use, when motor 1 is started the reaction to the motor torque swings the frame of motor 1 and the attached movable frame M in the anticlockwise direction (Figure 2). Consequently inclined slot 11 moves upwardedly (relative to Figure 2) and the resulting camming action on pin 10 forces sliding member 9 to the right, releasing the brake pad from the inner periphery of pulley 5.

When the motor is switched off, movable frame M is rotated clockwise back to its original position by tension spring 30, and also by friction in the motor bearings allowing sliding member 9 to move to the left under the action of compression spring 13 and braking pulley 5. In some cases the motor bearing friction may be sufficient to enable spring 30 to be dispensed with. Thus the "biasing means" coupled between the movable frame and the fixed frame need not be spring biasing means but can be frictional biasing means as constituted by the motor bearings, for example.

The motor is also braked when motor torque ceases for other reasons, such as removal of a load (not shown) from shaft 6. Shaft 6 may for example be coupled to a rotary cutter blade of a lawn mower, in which case it is highly desirable that the motor is rapidly braked when the power is switched off and /or the mower is turned on its side for inspection of the blade for example.

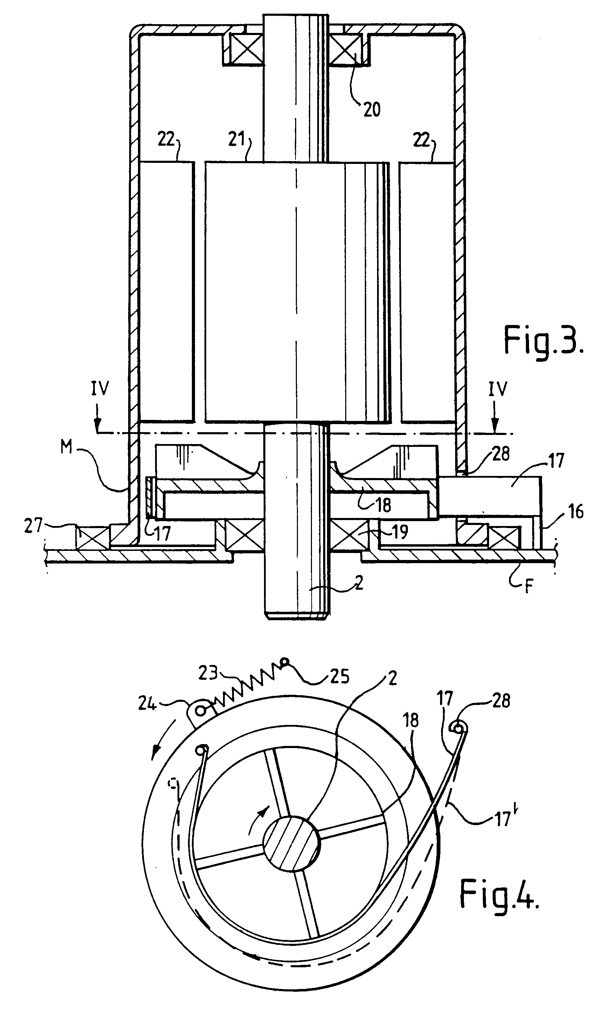

In the arrangement shown in Figures 3 and 4, movable frame M is constituted by the motor casing, which carries the field windings 22. Frame/motor casing M is mounted for rotation on a fixed frame F by means of bearings 27. A wrap spring 17 extends through an aperture 28 (Figure 3) in movable frame M and is attached at one end by a support 26 to fixed frame F, and at the other end to movable frame M, as shown in Figure 4. For the sake of simplicity, aperture 28 and the upright portion of movable frame M are not shown in Figure 4.

The electric motor of Figure 3 has an output shaft 2 which is mounted on bearings 19 and 20 and is driven by armature winding 21. A fan wheel 18 is fixedly mounted on shaft 2 and its outer periphery is partially encircled by wrap spring 17.

Shaft 2 is driven in the clockwise direction. In use, the reaction from a load (not shown) on shaft 2 twists movable frame M anticlockwise against the action of a tension spring 23 which is attached between a lug 24 on frame M and a support 25 from fixed frame F, as shown in Figure 4. Hence wrap spring 17 is moved to position 17¹ (figure 4) and releases fan wheel 18 which therefore rotates freely.

When the motor is switched off or the load is removed, the reaction to the motor torque ceases and spring 23 rotates frame M and the associated end of wrap spring 17 in the clockwise direction, braking the fan wheel 18 and the motor. This braking effect is enhanced by the frictional engagement between wrap spring 17 and the periphery of fan wheel 18, which causes the inertia of the fan wheel to rotate frame M further in the clockwise direction, tightening the wrap spring. In certain embodiments, tension spring 23 can be dispensed with, in which case the movable frame M will be biased to the braking condition solely by friction in the motor bearings 19 and 20.

## Claims

1. A braking arrangement for a motor, said braking arrangement comprising a fixed frame, a movable frame carried on the fixed frame and adapted to carry the frame of the motor, the movable frame being mounted for limited rotation about the motor axis with respect to the fixed frame, biasing means coupled between the movable frame and the fixed frame and tending to twist the movable frame relative to the fixed frame about said axis, and motor braking means coupled to the movable frame and biased to the braked condition, the motor braking means being movable to an unbraked condition in response to said movable frame twisting in response to a motor torque about said axis against the action of the said biasing means and the motor braking means being movable to a braked condition on cessation of said motor torque.

2. A braking arrangement according to claim 1 wherein said motor braking means is arranged to move to the braked condition on diminution of the torque transmitted from the motor below a threshold value.

3. A braking arrangement according to claim 1 or claim 2 wherein said motor braking means is biased to the braked condition by spring means and is coupled to the movable frame by a mechanical linkage which is arranged to move the motor braking means to the unbraked condition against the action of said spring means.

4. A braking arrangement according to claim 3 wherein said mechanical linkage comprises a camming arrangement.

5. A braking arrangement according to claim 4 wherein said braking means comprises a sliding member carrying a braking pad, said sliding member being coupled between said camming arrangement and spring means.

6. A braking arrangement according to claim 1 or claim 2 wherein said braking means comprises a wrap spring brake coupled at its ends between said movable frame and said fixed frame and movable to an unwrapped released condition by rotary movement of the movable frame against the action of said biasing means.

7. A motor drive arrangement comprising a braking arrangement as claimed in any preceding claim.

8. An electric motor drive arrangement according to claim 7 as dependent on claim 6, wherein said wrapping brake acts on a fan wheel coupled to the output shaft of an electric motor.

9. A motor drive arrangement according to claim 7 or claim 8 wherein the motor frame is integral with the moving frame.

10. A motor drive arrangement according to any of claims 7 to 9 wherein the movable frame and/or the braking means are biased solely by frictional means.

11. An arrangement according to any of claims 7 to 10 wherein said motor is an electric motor.

12. A braking arrangement for an electric motor, the braking arrangement being substantially as described hereinabove with reference to Figures 1 and 2 or 3 and 4 of the accompanying drawings.

13. An electric motor drive arrangement substantially as described hereinabove with reference to Figures 1 and 2 or 3 and 4 of the accompanying drawings.
